# EUROPÄISCHE PATENTSCHRIFT

(11) **EP 3 980 174 B1**
(45) Veröffentlichungstag und Bekanntmachung des Hinweises auf die Patenterteilung: **19.07.2023**
(21) Anmeldenummer: 20730387.6
(22) Anmeldetag: 27.05.2020
(51) Int. Cl.: B01J 8/12, B01J 8/08, B01J 8/42, B01J 19/08, C10B 55/04

(54) **REAKTOR MIT DIREKTER ELEKTRONISCHER BEHEIZUNG**
DIRECTLY ELECTRONICALLY HEATED REACTOR
RÉACTEUR À CHAUFFAGE ÉLECTRONIQUE DIRECT

(30) Priorität: 05.06.2019 DE 102019003982
(43) Veröffentlichungstag der Anmeldung: 13.04.2022
(73) Patentinhaber: Linde GmbH, 82049 Pullach (DE); BASF SE, 67063 Ludwigshafen (DE); thyssenkrupp Industrial Solutions AG, 45143 Essen (DE); thyssenkrupp AG, 45143 Essen (DE)
(72) Erfinder: POSSELT, Heinz, 83043 Bad Aibling (DE); MACHHAMMER, Otto, 68163 Mannheim (DE); WEIKL, Markus, 82544 Egling (DE); BÜKER, Karsten, 44137 Dortmund (DE); ANTWEILER, Nicolai, 45279 Essen (DE)
(74) Vertreter: BASF IP Association
(86) Internationale Anmeldenummer: PCT/EP2020/025247
(87) Internationale Veröffentlichungsnummer: WO 2020/244803

(56) Entgegenhaltungen:
- US-A- 2 982 622
- US-A- 4 255 403
- US-A1- 2019 151 817

## Beschreibung

Die Erfindung betrifft einen Reaktor umfassend ein Wanderbett aus festen Partikeln, welche sich in Gravitationsrichtung bewegen sowie ein Verfahren zur Beheizung eines Reaktors, für Pyrolysereaktionen, welcher ein Wanderbett umfasst.

Als Alternative zum etablierten Stand der Technik offenbart die US2982622. z.B. ein Verfahren zur Herstellung von Wasserstoff und hochwertigem Koks, bei dem inerte Feststoffteilchen als Schüttgut in Gravitationsrichtung, im Folgenden als Wanderbett bezeichnet, durch eine längliche Reaktionszone geleitet werden, eine elektrische Spannung von 0,1 bis 1000 Volt pro Zoll über mindestens einen Teil der Feststoffmasse in der Reaktionszone angelegt wird, wobei die Spannung ausreicht, um die Temperatur der Feststoffe auf 1800°F bis 3000°F (980°C bis 1650°C) zu erhöhen. Im Gegenstrom wird ein Gasstrom aus Kohlenwasserstoffen, vorzugsweise Erdgas geführt, der über die endotherme Pyrolysereaktion Wasserstoff erzeugt und Kohlenstoff auf den vorgelegten Partikeln ablagert

CH₄ <-> C(s) + 2 H₂.

Durch die Gegenstrombedingung von Feststoff und Gas kann eine Wärmeintegration erreicht werden, wodurch eine hohe Effizienz des Verfahrens ermöglicht wird. Durch die ohmsche, direktelektrische Beheizung kann bei Verwendung von Strom, der mit Hilfe von erneuerbaren Energien erzeugt wurde, die CO₂-Bilanz des Verfahrens der Wasserstoffproduktion durch einen Verzicht auf die fossile Beheizung verbessert werden.

Reaktoren aus dem Stand der Technik, welche für Hochtemperaturreaktionen bei über 900 °C geeignet sind wurden bisher mehrheitlich zylindrisch aufgebaut. Elektroden zur Beheizung der Reaktoren wurden wahlweise in die Zylinderwand integriert oder zumindest so axial im Reaktor angeordnet, dass eine Festbettschüttung oder ein Wanderbett nicht behindert wurden. Dargestellt ist ein derartiger Reaktor beispielsweise in US2982622.

Nachteilig an einer derartigen rein zylinderförmigen Reaktorgeometrie mit den Elektroden als Einbauten ist jedoch, dass bei einer zentralen inneren Stabelektrode das elektrische Feld radial inhomogen ist und deshalb die Reaktion nicht gleichmäßig im Reaktorvolumen abläuft. Bei in der Zylinderwand integrierten Elektroden kann Kohlenstoff, der sich an der Wand ablagert zu elektrischen Kurzschlüssen führen, die ebenfalls eine homogene Beheizung des Reaktors verhindern. Der abgeschiedene Kohlenstoff führt zudem dazu, dass die Partikel des Wanderbettes verbacken wodurch deren Rieselfähigkeit beeinträchtigt wird und der Reaktor verblockt.

Aufgabe der vorliegenden Erfindung ist es deshalb eine Reaktorgeometrie und eine Anordnung der Elektroden anzugeben, bei der die Nachteile des Stands der Technik überwunden werden können.

Vorrichtungsseitig und Verfahrensseitig wird die Aufgabe dadurch gelöst, dass sich der der Strömungsquerschnitt des Reaktors über die Länge der Reaktionszone verändert und elektrische Elektroden, ring-konzentrisch in der Reaktionszone angeordnet sind. Durch diese Reaktionszone wird das Wanderbett hindurchgeführt, welches durch die Elektroden beheizt wird.

Durch die erzwungene Relativbewegung der Partikel des Wanderbettes durch den sich verändernden Strömungsquerschnitt wird ein Zusammenbacken der Partikel durch abgelagerten Kohlenstoff verhindert. Die ring-konzentrischen Elektroden können durchgehend oder unterbrochen in einer axialsymmetrischen Anordnung oder bei pyramidalen Reaktorgeometrien als ebene Fläche angeordnet werden. Kurzschlüsse werden zudem vermieden, da die durch die konzentrische Anordnung mit innen und außen liegenden Elektroden immer erst durch die Schüttung fließen muss.

Die Elektroden sind dabei vorzugsweise aus einem graphithaltigen Material gefertigt und weisen über die Länge hin eine variierende Leitfähigkeit auf.

Der Strömungsquerschnitt des Reaktors verändert sich bevorzugt so über die Länge der Reaktionszone, dass dieser eine konische oder nahezu konische Form aufweist. Dabei ist bevorzugt der konische Teil des Reaktors so angeordnet ist, dass der breitere Teil des Konus bei der Zuführung des Wanderbettes angeordnet ist. Dies ist in den meisten Fällen in Gravitationsrichtung oben. Es versteht sich für einen Fachmann, dass bei entsprechenden industriellen Reaktorgeometrien eine exakte Radialsymmetrie nicht immer eingehalten kann und Reaktoren eher als Vieleck gebaut sind. Bevorzugt ist der Reaktor zudem als Ringspalt ausgebildet. Dieser kann technisch gleichförmig gerade sein, sich aber auch über die Reaktorlänge vergrößern oder verringern. Dazu können verschiedene Einbauen, beispielsweise Pyramidenförmige Geometrien, im Reaktor vorgesehen werden. Durch eine Ausführungsform als Ringspalt kann die ring-konzentrische Anordnung der Elektroden weiter optimiert werden und die oben erwähnten Vorteile verstärken sich.

Der Reaktor weist zudem Einlässe und Auslässe für gasförmige Edukte und Produkte auf, so dass der Edukt- und Produktstrom im Gegenstrom zum Wanderbett geführt werden kann. Weiterhin ist können nahe des Produktauslasses weitere Zuführungen für Kühlgas vorgesehen sind. Als Kühlgas wird bevorzugt kaltes Produktgas oder inertes Gas verwendet.

Das Wanderbett wird bevorzugt auf Temperaturen von 900 bis 1200 °C aufgeheizt.

Der beschriebene Reaktor und das beschriebene Verfahren wird bevorzugt zur Methanpyrolyse verwendet wobei als Edukt ein methanhaltiger Gasstrom verwendet wird.

In einer besonderen Ausgestaltung wird dem Reaktor über einen zylindrischen Einlass von oben das kalte Wanderbett zugeführt. Das Wanderbett wird anschließend über eine konusförmige Erweiterung des Zylinderrohres in einen sich verengenden weiteren Konus überführt. Das Wanderbett wird in Gravitationsrichtung durch den Reaktor geführt. Innerhalb der Konen kann in einer zusätzlichen Ausgestaltungsvariante ein Einbau vorhanden sein, so dass ein Ringschacht entsteht. Durch die konische Form, verstärkt durch den Ringschacht, kommt es zu einer Relativbewegung zwischen den Partikeln des Wanderbettes. Dadurch können Kohlenstoffablagerungen auf den Partikeln des Wanderbettes abgeschieden werden und am unteren Ende des Reaktors am Auslass des Wanderbettes, welches wiederum bevorzugt zylinderförmig ausgebildet ist, zusammen mit dem Wanderbett ausgetragen werden.

Innerhalb des konusförmigen Teils des Reaktors oder im Ringschacht sind Elektroden angebracht, welche an der Wand des Reaktors oder des Einbaus montiert sind. Diese Elektroden heizen das Wanderbett, welches zwischen ihnen hindurchgeführt wird. Kurzschlüsse werden dadurch vermieden, da Kohlenstoff nur in der heißen Zone abgeschieden wird, die elektrische Kontaktierung aber im kalten Bereich erfolgt.

Die Elektroden weißen an den Enden bevorzugt eine abgerundete Form auf. Die Leitfähigkeit ist vorteilhafterwiese an den jeweiligen Elektrodenenden minimiert. Dies geschieht durch eine Minimierung der Elektrodenfläche und/oder durch eine veränderte Materialzusammensetzung.

Durch die beschriebenen geometrischen Formen der Elektroden wird der Strömungswiderstand für das Wanderbett minimiert. Ein zusätzlicher Vorteil ist es, dass dadurch ein Aufsetzen der Kohlenstoffpartikel oder ein Anbacken verhindert wird. Heiße Zonen an den Elektrodenenden werden vermieden und beeinträchtigen dadurch die Reaktion nicht.

Der Edukt und Produktstrom wird im Gegenstrom zum Wanderbett im Reaktor geführt. Es wird kalter Eduktstrom zugeführt, welcher durch das austretende warme Wanderbett aufgeheizt wird. Durch den Wärmeaustauch kann das kalte Wanderbett direkt aus dem Reaktor abgezogen werden und muss nicht weiter gekühlt werden. Durch die Gegenstromführung wird die Wärme innerhalb des Reaktors in einer Wärmeintegrationszone gehalten, und eine es ist eine energieeffiziente Reaktionsführung möglich.

Zur Kontrolle des Temperaturprofils des Reaktors wird, wenn nötig in einer besonders bevorzugten Ausgestaltungvariante des Reaktors nahe des Produktauslasses über eine Zuführung Kühlgas zugeführt. Beim dem Kühlgas handelt es sich bevorzugt um bereits gekühltes Produktgas.

Der Reaktor kann neben der Methanpyrolyse auch für andere Reaktionen verwendet werden.

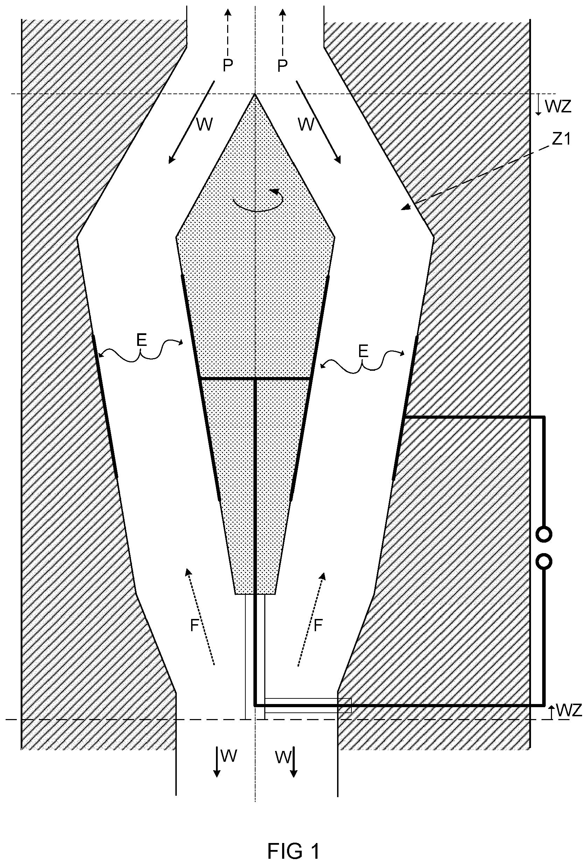

Weitere Merkmale und Vorteile der Erfindung sollen nachfolgend bei der Beschreibung eines Ausführungsbeispiels anhand der Figur 1 erläutert werden. Es zeigen:
- Fig. 1: eine Schnittansicht eines erfindungsgemäßen Reaktors

Figur 1 zeigt eine bevorzugte Reaktorgeometrie in Schnittansicht. Ein Wanderbett W wird dem Reaktor von oben über eine zylindrische Zuführung zugeführt. Die äußere Reaktorwand ist bevorzugt durch eine Ausmauerung isoliert.

Das Wanderbett W wird in einen Ringschacht geführt, welcher aus zwei gegengleich aufgebauten Konen ausgeführt ist. Der Ringschacht wird durch Einbauten realisiert. An der Wand des Ringschachtes und der Einbauten sind ringkonzentrisch Elektroden E angebracht.

Bevorzugt wird der Reaktor für die Pyrolyse von Methan verwendet. Dazu wird ein methanhaltiger Feedstrom F im Gegenstrom zum Wanderbett W geführt. Der Feedstrom wird auf 900 bis 1200 °C aufgeheizt und zu Wasserstoff und Kohlenstoff oder Synthesegas umgesetzt. Der Produktstrom P wird am oberen Ende des Reaktors abgezogen.

Durch das Gegenstromverfahren wird eine effektive Wärmeintegration erzielt und es sind keine aufwändigen Vorrichtungen zur Kühlung oder Vortemperierung des Wanderbettes oder der Gasströme notwendig.

Um das Temperaturprofil innerhalb des Reaktors steuern zu können kann über eine Zuführung Z1 Kühlgas zugeführt werden. In diesem Beispiel wird bevorzugt kaltes Produktgas als Kühlgas verwendet.

## Patentansprüche

1. Reaktor, für eine Pyrolysereaktion, umfassend ein Wanderbett aus festen Partikeln, welche sich in Gravitationsrichtung bewegen, **dadurch gekennzeichnet, dass** sich der Strömungsquerschnitt des Reaktors über die Länge einer Reaktionszone verändert und elektrische Elektroden, ring-konzentrisch in der Reaktionszone angeordnet sind, durch welche das Wanderbett hindurchgeführt wird.

2. Reaktor nach Anspruch 1, **dadurch gekennzeichnet, dass** die Elektroden aus einem graphithaltigen Material gefertigt sind und über die Länge hin eine variierende Leitfähigkeit aufweisen.

3. Reaktor nach einem der Ansprüche 1 bis 2, **dadurch gekennzeichnet, dass** der Strömungsquerschnitt des Reaktors sich so über die Länge der Reaktionszone verändert, dass dieser eine konische oder nahezu konische Form aufweist.

4. Reaktor nach Anspruch 1 bis 3, **dadurch gekennzeichnet, dass** der Reaktor Einlässe und Auslässe fürgasförmige Edukte und Produkte aufweist, so dass der Edukt- und Produktstrom im Gegenstrom zum Wanderbett geführt werden kann.

5. Reaktor nach einem der Ansprüche 1 bis 4, **dadurch gekennzeichnet, dass** nahe des Produktauslasses weitere Zuführungen für Kühlgas vorgesehen sind.

6. Reaktor nach einem der Ansprüche 1 bis 5, **dadurch gekennzeichnet, dass** der konische Teil des Reaktors so angeordnet ist, dass der breitere Teil des Konus bei der Zuführung des Wanderbettes angeordnet ist.

7. Verfahren zur Beheizung eines Reaktors, für Pyrolysereaktionen, welcher ein Wanderbett umfasst **dadurch gekennzeichnet, dass** das Wanderbett durch den Reaktor geführt wird, wobei sich der Strömungsquerschnitt des Reaktors über die Länge einer Reaktionszone verändert, und wobei in dem Reaktor, ring-konzentrische Elektroden angeordnet sind, durch welche das Wanderbett hindurchgeführt wird und welche das Wanderbett beheizen.

8. Verfahren nach Anspruch 7, **dadurch gekennzeichnet, dass** das Wanderbett im Gegenstrom zu einem Edukt und Produktstrom geführt wird.

9. Verfahren nach Anspruch 7 oder 8, **dadurch gekennzeichnet, dass** das Wanderbett auf Temperaturen von 900 bis 1200°c aufgeheizt wird.

10. Verfahren nach einem der Ansprüche 7 bis 9, **dadurch gekennzeichnet, dass** als Edukt ein methanhaltiger Gasstrom verwendet wird und der Reaktor zur Methanpyrolyse verwendet wird.

11. Verfahren nach einem der Ansprüche 7 bis 10, **dadurch gekennzeichnet, dass** zur Kühlung eines austretenden Produktstroms nahe dem Produktauslass ein Kühlgas zugeführt wird.

## Claims

1. A reactor, for a pyrolysis reaction, comprising a moving bed composed of solid particles that move in the direction of gravity, wherein the flow cross section of the reactor varies over the length of a reaction zone, and electrical electrodes are in a ring-concentric arrangement in the reaction zone through which the moving bed is guided.

2. The reactor according to claim 1, wherein the electrodes are manufactured from a graphitic material and have varying conductivity over their length.

3. The reactor according to any of claims 1 to 2, wherein the flow cross section of the reactor varies over the length of the reaction zone such that it has a conical or virtually conical shape.

4. The reactor according to claims 1 to 3, wherein the reactor has inlets and outlets for gaseous reactants and products, such that the reactant and product stream can be guided in countercurrent to the moving bed.

5. The reactor according to any of claims 1 to 4, wherein further feeds for cooling gas are provided close to the product outlet.

6. The reactor according to any of claims 1 to 5, wherein the conical portion of the reactor is arranged such that the broader part of the cone is disposed in the feed of the moving bed.

7. A method of heating a reactor, for pyrolysis reactions, comprising a moving bed, wherein the moving bed is guided through the reactor, where the flow cross section of the reactor varies over the length of a reaction zone, and where ring-concentric electrodes are disposed in the reactor, through which the moving bed is guided and which heat the moving bed.

8. The method according to claim 7, wherein the moving bed is guided in countercurrent to a reactant and product stream.

9. The method according to claim 7 or 8, wherein the moving bed is heated up to temperatures of 900 to 1200°C.

10. The method according to any of claims 7 to 9, wherein the reactant used is a methane-containing gas stream and the reactor is used for methane pyrolysis.

11. The method according to any of claims 7 to 10, wherein a cooling gas is fed in close to the product outlet for cooling of an exiting product stream.

## Revendications

1. Réacteur, pour une réaction de pyrolyse, comprenant un lit mobile composé de particules solides, qui se déplacent dans la direction de la gravitation, **caractérisé en ce que** la section transversale d'écoulement du réacteur se modifie sur la longueur d'une zone de réaction et des électrodes électriques sont agencées en cercles concentriques dans la zone de réaction, à travers lesquelles le lit mobile est guidé.

2. Réacteur selon la revendication 1, **caractérisé en ce que** les électrodes sont fabriquées à partir d'un matériau contenant du graphite et présentent une conductivité qui varie sur la longueur.

3. Réacteur selon l'une quelconque des revendications 1 à 2, **caractérisé en ce que** la section transversale d'écoulement du réacteur se modifie sur la longueur de la zone de réaction de telle manière que celui-ci présente une forme conique ou presque conique.

4. Réacteur selon les revendications 1 à 3, **caractérisé en ce que** le réacteur présente des entrées et des sorties pour des éduits et produits gazeux, de sorte que le flux d'éduit et de produit puisse être guidé à contre-courant par rapport au lit mobile.

5. Réacteur selon l'une quelconque des revendications 1 à 4, **caractérisé en ce que**, à proximité de la sortie de produit, d'autres alimentations pour un gaz de refroidissement sont prévues.

6. Réacteur selon l'une quelconque des revendications 1 à 5, **caractérisé en ce que** la partie conique du réacteur est disposée de telle manière que la partie plus large du cône est disposée à l'alimentation du lit mobile.

7. Procédé de chauffage d'un réacteur, pour des réactions de pyrolyse, qui comprend un lit mobile, **caractérisé en ce que** le lit mobile est guidé à travers le réacteur, la section transversale d'écoulement du réacteur se modifiant sur la longueur d'une zone de réaction, et dans le réacteur, des électrodes étant agencées en cercles concentriques, à travers lesquelles le lit mobile est guidé et qui chauffent le lit mobile.

8. Procédé selon la revendication 7, **caractérisé en ce que** le lit mobile est guidé à contre-courant par rapport à un flux d'éduit et de produit.

9. Procédé selon la revendication 7 ou 8, **caractérisé en ce que** le lit mobile est chauffé à des températures de 900 à 1 200 °C.

10. Procédé selon l'une quelconque des revendications 7 à 9, **caractérisé en ce qu'**en tant qu'éduit, un flux de gaz contenant du méthane est utilisé et le réacteur est utilisé pour la pyrolyse de méthane.

11. Procédé selon l'une quelconque des revendications 7 à 10, **caractérisé en ce qu'**un gaz de refroidissement est alimenté à proximité de la sortie de produit pour le refroidissement d'un flux de produit sortant.
